# Europäisches Patentamt

# European Patent Office

# Office européen des brevets

(11) Publication number: **0 253 848**
**B1**

## (12) EUROPEAN PATENT SPECIFICATION

(45) Date of publication of patent specification: **11.04.90**

(21) Application number: **87900700.3**

(22) Date of filing: **05.01.87**

(86) International application number:
**PCT/SE87/00003**

(87) International publication number:
**WO 87/04128 16.07.87 Gazette 87/15**

(51) Int. Cl.⁵: **B 62 D 61/10**

(54) FORWARDER.

(30) Priority: **10.01.86 SE 8600123**

(43) Date of publication of application:
**27.01.88 Bulletin 88/04**

(45) Publication of the grant of the patent:
**11.04.90 Bulletin 90/15**

(84) Designated Contracting States:
**AT DE FR GB**

(56) References cited:
**WO-A-86/02893**
**SE-B- 400 243**
**US-A-4 470 475**

(73) Proprietor: **ÖSA AB**
**P.O.Box 500**
**S-822 00 Alfta (SE)**

(72) Inventor: **HERLOF, Olof**
**Norrlidsgatan 8**
**S-852 50 Sundsvall (SE)**

(74) Representative: **Rostovanyi, Peter et al**
**AWAPATENT AB Box 5117**
**S-200 71 Malmö (SE)**

Courier Press, Leamington Spa, England.

## Description

Technical field of the invention

This invention relates to a forwarder comprising a wheeled chassis, a driver's cab, a load carrier and six hydrostatically, individually driven wheels of which four front wheels located in the region underneath the cab are arranged in pairs in such a manner that a pair of wheels located on the same side are mounted on a common yoke so as to form a bogie which is individually pivotal relative to the chassis.

The prior art

A forwarder of the type generally defined above is previously known from the US patent 4 470 475. In this known forwarder the chassis is divided into two parts, namely a front part supporting the cab and a rear part supporting the load carrier, said parts being interconnected by a hinge allowing mutual turning or pivoting movements of the parts in the horizontal plane so as to steer the vehicle. This means that not only the front part of the chassis but also the load-carrying rear part has to be supported by four wheels, thus necessitating totally eight wheels for the vehicle, and furthermore the hinge connection between said chassis parts calls for an elongate drawhook on the front part in order to make the pivoting movements possible. This drawhook is of a substantial length making the total length of the vehicle considerable.

Summary of the invention

The present invention aims at providing a lightweight, compact forwarder which is easy and inexpensive to manufacture and which affords high reliability and convenience for the driver. According to the invention this and other objects are achieved in that a bottom chassis part for the load carrier is rigidly connected to a front part of the chassis carrying the cab, and that two single rear wheels located underneath the load carrier on each side of the chassis are steerable by a pivotal movement relative to the chassis and mounted thereon by means of a pendulum suspension.

Brief description of the drawings

In the drawings,

FIG. 1 is a simplified perspective view illustrating a first embodiment of the forwarder of the invention,

FIG. 2 is a top plan view of the chassis of the same forwarder,

FIG. 3 is a side view thereof,

FIG. 4 is a front end view of the same forwarder,

FIG. 5 is a side view illustrating the forwarder in a particular state of operation,

FIG. 6 is an end view illustrating the forwarder in another state of operation,

FIG. 7 is a side view of an alternative embodiment of the forwarder,

FIG. 8 is a top plan view of the chassis of the forwarder shown in FIG 7, and

FIG. 9 is a perspective view of yet another alternative embodiment of the invention.

Description of the Preferred embodiments of the invention

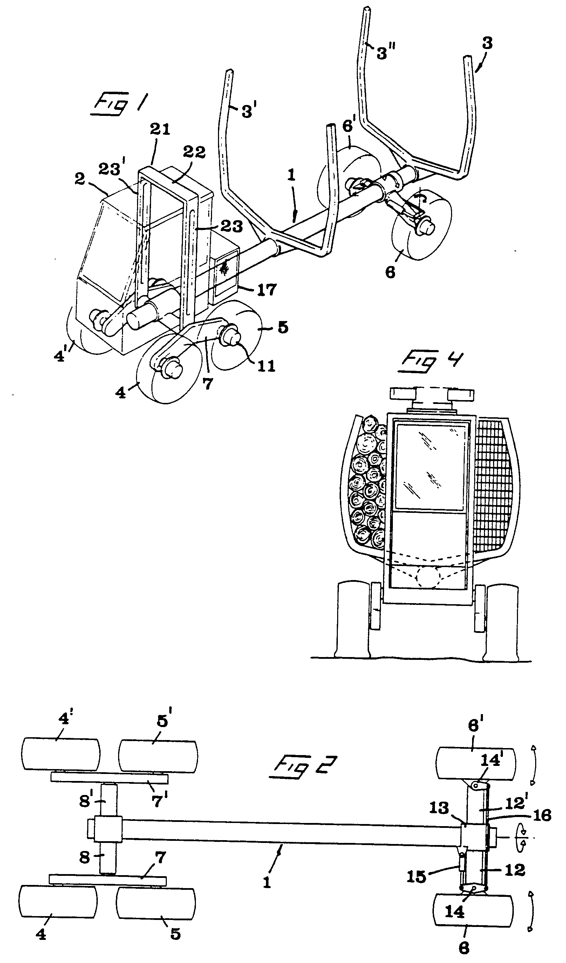

The forwarder shown in Figs. 1-4 has a chassis generally designated 1 on which a driver's cab 2 is mounted, and a load carrier 3 which is disposed behind the cab and which in the illustrated embodiment is in the form of two loading bunks 3', 3''. The chassis consists of a sturdy, simple tubular structure mounted on six wheels, namely four front wheels 4, 4', 5, 5' and two rear wheels 6, 6'. The two front wheels 4, 5 located on the same side of the vehicle are mounted on a common yoke 7 so as to form a bogie which is individually pivotal relative to the chassis, more specifically relative to a transverse suspension arm 8 rigidly connected to the tubular structure 1. Similarly, the wheels 4', 5' are mounted on a yoke 7' which is pivotal relative to an arm 8'. The pivotal movement of each yoke about its pivot point 9 can be brought about by means of at least one hydraulic cylinder 10. In practice, there are mounted in each of the six wheels hydraulic motors 11 by means of which the wheels can be individually driven.

The rear wheels 6, 6' are mounted on arms 12, 12' which are connected to the tubular structure forming the chassis, by means of a pendulum suspension 13 allowing the arms and, thus, the wheels to pivot or execute a pendulum movement relative to the chassis. The rear wheels are designed with so-called double-pivot steering, which means that they are pivotal relative to vertical joints 14, 14' at the free ends of the arms 12, 12'. The pivotal movement of the wheels is ensured by a hydraulic cylinder 15 in combination with a track rod 16 ensuring that the wheels are always turned in a uniform manner. According to a special feature of the invention, the two rear wheels 6, 6' may be idle, when so desired, in that the associated hydraulic motors are disengaged.

Behind the driver's cab 2, there is provided a drive unit 17 which may contain a fuel tank, an engine, a hydraulic motor, a hydraulic tank and hydraulic valves. Alternatively, this drive unit may be mounted for instance underneath the cab so as to obtain an extremely compact forwarder. As best seen in Fig. 3, the operator can enter the cab 2 by the front, suitably in that a lower wall-forming part 18 can be folded down and is provided with steps on its inside, while an upper, transparent door 19 can be swung upwards.

The crane 20 which is intended to serve the load carrier 3 is mounted with its base portion above the roof of the driver's cab 2. More specifically, the crane is mounted on a frame 21 comprising a cross-beam 22 and two vertical legs 23, 23' on both sides of the cab. The legs 23, 23' are disposed approximately midway between the two front wheels 4, 5 of each bogie so as to provide sufficient stability in connection with loading and unloading.

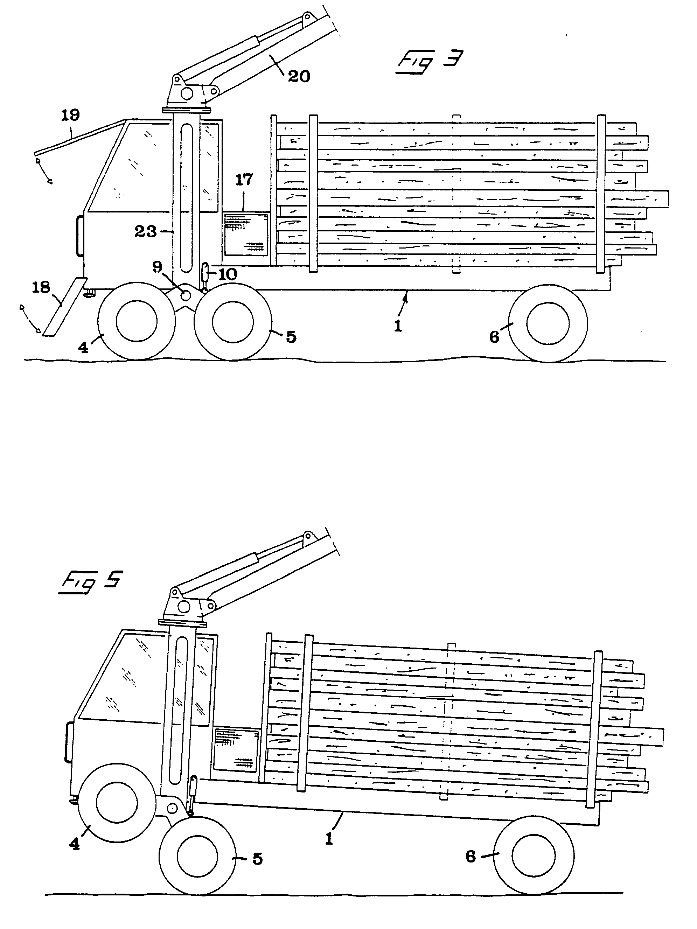

During cross-country driving, all six wheels are advantageously driven, so that the vehicle will run safely and with great power, although at a relatively low speed (e.g. 0-10 km/h). When, on the other hand, the forwarder travels on a road at a high speed, the rear wheels are disconnected so as to become idle, and the front wheel bogies are tilted in the manner illustrated in Fig. 5, whereby only two wheels, namely the wheels 5, 5' will rotate and be in driving engagement with the ground. In this manner, it is possible to increase the speed three times (e.g. up to 20-30 km/h). It is also conceivable to run the forwarder with all four front wheels in driving engagement with the ground, so as to obtain an intermediate speed (e.g. 10-20 km/h). The tilting of the front wheels bogies in the manner shown in Fig. 5 may also be effected during cross-country travel, for instance on a snowy ground, in which case the front wheels will compact the snow so as to facilitate the travel of the following wheels. Such tilting of the front wheel bogies may also be used for increasing the stability of the vehicle. Individual tilting of the wheel bogies may be effected when driving on sloping ground, as illustrated in Fig. 6. By such tilting, the cab can be maintained in a substantially horizontal position despite the slope of the ground.

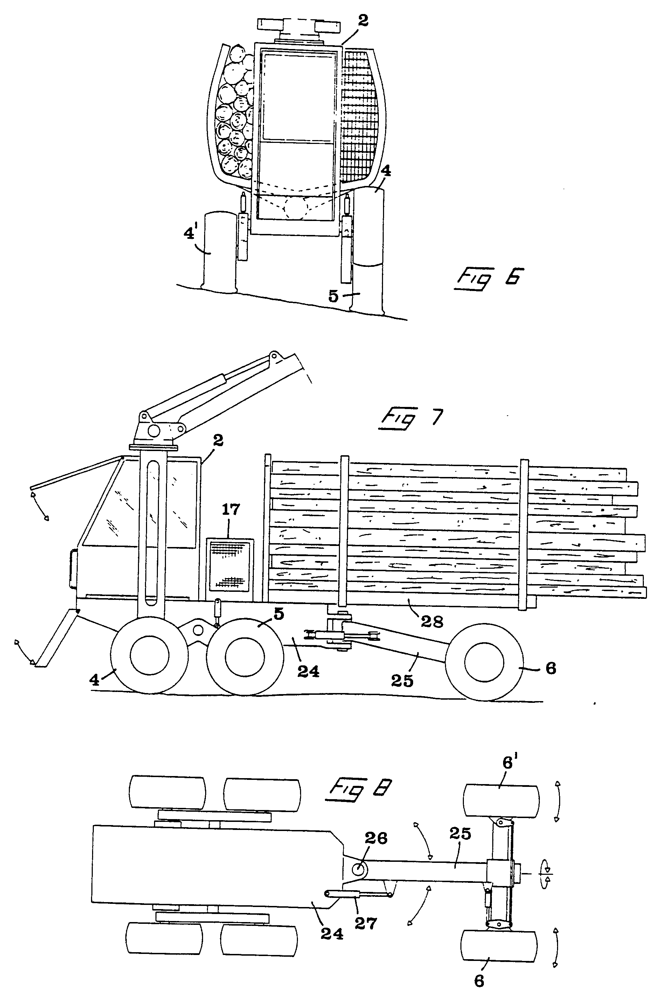

Reference is now had to Figs. 7-8 showing an alternative embodiment in which the chassis, in addition to a cab-supporting part 24, has a tail part 25 connected to the part 24 by means of a joint 26. The tail part 25 is pivotal relative to the cab-supporting part 24 by means of at least one hydraulic cylinder 27 so as to provide articulated frame steering of the vehicle. In this case, too, the two rear wheels 6, 6' are mounted on the tail part by a pendulum suspension and are pivotal relative to the pendulum arms so as to provide double-pivot steering. This type of steering may advantageously be used when driving on a road, while articulated frame steering by means of the hydraulic cylinder 27 may be used during cross-country travel. In the illustrated embodiment, it is also possible to combine articulated frame steering with double-pivot steering. In the illustrated embodiment, the load carrier 3 has a sturdy bottom part 28 which projects from the cab-supporting part 24 and forms together therewith a single, rigid unit.

Although a drive unit 17 is shown between the cab 2 and the load carrier 3, it is conceivable to build in the drive unit in the cab-supporting part 24 so as to reduce the overall length of the vehicle.

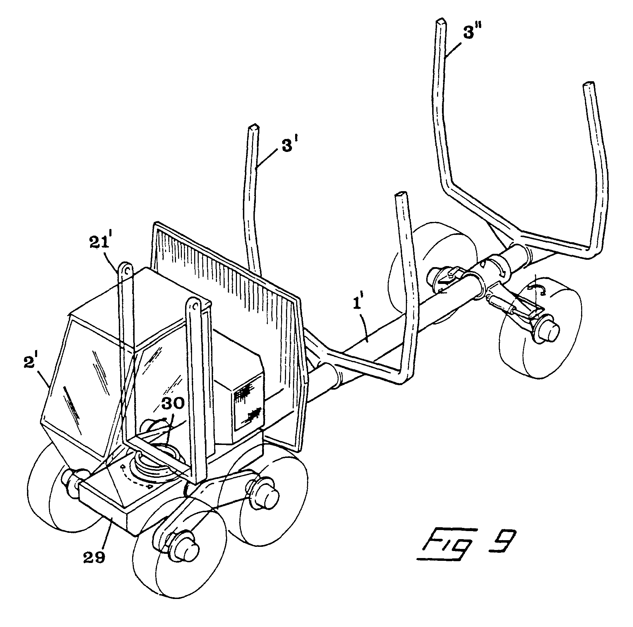

In the embodiment shown in Fig. 9, the tubular structure 1' is rigidly connected to a front box or part 29 supporting the cab 2', the tube 1' and the front part 29 together forming a continuous rigid chassis. In this case, the crane or the frame 21' serving as attachment for the crane is stationarily connected to the cab 2' which is connected to the chassis, more precisely the front part 29 thereof, by the intermediary of a gear rim 30 or the like allowing the cab to rotate relative to the chassis. In this way, the crane will positively follow the cab during rotation thereof to different working positions. This in turn means that the operator sitting in the cab need not turn his body to follow the crane when moved to different working positions. In this context, it should also be noted that the central point about which both the cab and the crane pivot is always fixed in relation to the load carrier since the tubular structure 1' is rigidly connected to the front part 29.

A unique feature of the inventive forwarder is that a single rigid chassis (in the form of a single tubular structure 1 according to Figs. 1-6; the front part 24 and the bottom part 28 rigidly connected thereto according to Figs. 7-8; and the front part 29 and the tubular structure 1' according to Fig. 9) carries both the load carrier 3 and the cab 2 as well as the crane 20 mounted on the cab. In this manner, the attachment or pivot point of the crane will always occupy one and the same geometrically fixed position in relation to the load carrier, this considerably facilitating loading and unloading of the load carrier as compared with such forwarders with articulated frame steering in which the load carrier is articulated in relation to the cab chassis and in which, as is well known, the load carrier may occupy highly different positions in relation to the crane. It should also be pointed out that the chassis of the forwarder does not require any special spring systems since the required spring action of the vehicle is fully satisfied by the resilience of the tyres of the wheels. Thus, the chassis can be manufactured in an extremely simple and inexpensive way.

Possible modifications of the invention

Naturally, the invention is not restricted only to the embodiments described above and shown in the drawings. Thus, the design of the driver's cab, the crane, the crane attachment, the load carrier and the chassis may be modified in several different ways within the scope of the accompanying claims.

**Claims**

1. A forwarder comprising a wheeled chassis, a driver's cab, a load carrier and six hydrostatically, individually driven wheels (4, 4', 5, 5', 6, 6') of which four front wheels (4, 4', 5, 5') located in the region underneath the cab (2) are arranged in pairs in such a manner that a pair of wheels (4-5, 4'-5') located on the same side are mounted on a common yoke (7, 7') so as to form a bogie which is individually pivotal relative to the chassis (1), characterized in that a bottom chassis part (1, 28, 1') for the load carrier (3) is rigidly connected to a front part (8, 24, 29) of the chassis carrying the cab (2), and that two single rear wheels (6, 6') located underneath the load carrier (3) on each side of the chassis are steerable by a pivotal movement relative to the chassis and mounted thereon by means of a pendulum suspension.

2. Forwarder as claimed in claim 1, characterized in that at least the two rear wheels (6, 6') may be idle, as desired, while simultaneously maintaining only two or alternatively all four front wheels (4, 4', 5, 5') in driving engagement with the ground.

3. Forwarder as claimed in any one of the preceding claims, characterized in that a frame (21) surrounding the cab for carrying the crane (20) is disposed with its legs (23, 23') approximately midway between the two front wheels of each bogie.

4. Forwarder as claimed in any one of the preceding claims, characterized in that each rear wheel (6, 6') is articulated to an arm (12, 12') projecting from the pendulum suspension (13) and pivotal in relation to said arm by means of a hydraulic cylinder or the like (15) for steering said rear wheels at a desired angle relative to the front wheels.

5. Forwarder as claimed in any one of the preceding claims, characterized in that the chassis is in the form of a tubular or profiled structure (1) having bending and torsional rigidity and extending between fixed suspension arms (8, 8') or a rigid frame or the like for the front wheel bogies and the pendulum-suspended arms (12, 12') for the rear wheels, both the load carrier (3) and the crane-supporting cab (2) being fixedly mounted on said structure.

6. Forwarder as claimed in any one of claims 1-4, characterized in that the chassis, in addition to a cab-supporting part (24) on which the bottom part (28) for the load carrier is rigidly mounted, comprises a tail part (25) articulated thereto and pivotal in relation to the cab-supporting part by means of at least one hydraulic cylinder or the like (27) for steering said rear wheels (6, 6') at a desired angle relative to the front wheels.

7. Forwarder as claimed in any one of the preceding claims, characterized in that the crane or an attachment (21') therefor is rigidly connected to the cab (2') and that the cab (2') is rotatable relative to the chassis (29, 1').

**Patentansprüche**

1. Forstschlepper, umfassend ein Fahrgestell mit Rädern, ein Fahrerhaus, einen Lastenträger und sechs hydrostatisch einzeln angetriebene Räder (4, 4', 5, 5', 6, 6'), von denen sich vier im Bereich unterhalb des Fahrerhauses (2) befindende Vorderräder (4, 4', 5, 5') paarweise in einer solchen Weise angeordnet sind, dass zwei sich auf derselben Seite befindende Räder (4-5, 4'-5') auf einem gemeinsamen Träger (7, 7') montiert sind und somit einen Bogie bilden, der im Verhältnis zum Fahrgestell (1) einzeln schwenkbar ist, dadurch gekennzeichnet, dass ein unterer Fahrgestellteil (1, 28, 1') für den Lastenträger (3) mit einem vorderen, das Fahrerhaus (2) tragenden Teil (8, 24, 29) des Fahrgestells starr verbunden ist, und dass zwei einzelne, sich unter dem Lastenträger (3) auf je einer Seite des Fahrgestells befindende Hinterräder (6, 6') durch Verschwenken im Verhältnis zum Fahrgestell lenkbar und daran mittels einer Pendelaufhängung montiert sind.

2. Forstschlepper nach Anspruch 1, dadurch gekennzeichnet, dass zumindest die zwei Hinterräder (6, 6') bei Bedarf leerlaufen, gleichzeitig wie nur zwei oder alternativ alle vier Vorderräder (4, 4' 5, 5') mit dem Boden in Antriebsberührung stehen.

3. Forstschlepper nach einem der vorhergehenden Ansprüche, dadurch gekennzeichnet, dass ein das Fahrerhaus umgebender und den Kran (20) tragender Rahmen (21) derart angeordnet ist, dass sich seine Beine (23, 23') etwa mitten zwischen den beiden Vorderrädern jedes Bogies befinden.

4. Forstschlepper nach einem der vorhergehenden Ansprüche, dadurch gekennzeichnet, dass jedes Hinterrad (6, 6') mit einem von der Pendelaufhängung (13) vorstehenden Arm (12, 12') gelenkig verbunden und diesem gegenüber mittels eines Hydraulikzylinders od. dgl. (15) schwenkbar ist, um die genannten Hinterräder in einem gewünschten Winkel im Verhältnis zu den Vorderrädern zu lenken.

5. Forstschlepper nach einem der vorhergehenden Ansprüche, dadurch gekennzeichnet, dass das Fahrgestell eine biege- und drehsteife Rohr- oder Profilkonstruktion (1) ist, die sich zwischen festen Aufhängearmen (8, 8'), oder einem festen Rahmen od. dgl. für die Vorderradbogies, und den pendelnd aufgehängten Armen (12, 12') für die Hinterräder erstreckt, wobei sowohl der Lastenträger (3) als auch das den Kran tragende Fahrerhaus (2) fest auf dieser Konstruktion montiert sind.

6. Forstschlepper nach einem der Ansprüche 1-4, dadurch gekennzeichnet, dass das Fahrgestell ausser einem das Fahrerhaus tragenden Teil (24), auf dem der untere Teil (28) des Lastenträgers starr montiert ist, einen hinteren Teil (25) umfasst, der mit dem das Fahrerhaus tragenden Teil gelenkig verbunden und diesem gegenüber mittels zumindest eines Hydraulikzylinders od. dgl. (27) schwenkbar ist, um die genannten Hinterräder (6, 6') in einem gewünschten Winkel im Verhältnis zu den Vorderrädern zu lenken.

7. Forstschlepper nach einem der vorhergehenden Ansprüche, dadurch gekennzeichnet, dass der Kran oder eine Befestigung (21') für den Kran starr mit dem Fahrerhaus (2') verbunden ist, und dass das Fahrerhaus (2') im Verhältnis zum Fahrgestell (29' 1') drehbar ist.

**Revendications**

1. Fardier comportant un châssis sur roues, une cabine de conducteur, un porte-charge et six roues (4,4', 5, 5', 6, 6') individuellement entraînées par voie hydrostatique, dont quatre roues avant (4,4', 5, 5') situées dans la région située sous la cabine (2) sont disposées en paires de façon telle qu'une paire de roues (4-5, 4'-5') situées du même côté sont montées sur une chape commune (7, 7') de façon à former un bogie qui peut individuellement pivoter par rapport au châssis (1), caractérisé en ce que qu'une partie inférieure (1, 28, 1') du châssis pour le porte-charge (3) est rigidement reliée à une partie avant (8, 24, 29) du châssis portant la cabine (2); et en ce que deux roues arrière, individuelles, (6, 6'), situées sous le porte-charge (3) de chaque côté du châssis, peuvent braquer par un mouvement de pivotement par rapport au châssis et y sont montées par 1, intermédiaire d'une suspension pendulaire.

2. Fardier selon la revendication 1, caractérisé en ce que l'on peut rendre non motrices, à la demande, au moins les deux roues arrière, tout en maintenant simultanément seulement deux, ou en variante les quatre roues avant (4,4', 5, 5') en prise motrice avec le sol.

3. Fardier selon l'ne quelconque des revendications précédentes, caractérisé en ce qu'un cadre (21) entourant la cabine pour porter la grue (20) est disposé avec ses branches (23, 23') approximativement à mi-chemin entre les deux roues avant de chaque bogie.

4. Fardier selon l'une quelconque des revendications précédentes, caractérisé en ce que chaque roue arrière (6, 6') est articulée sur un bras (12, 12') débordant de la suspension pendulaire (13) et peut pivoter par rapport audit bras au moyen d'un vérin hydraulique ou analogue (15) pour braquer lesdites roues arrière sous un angle désiré par rapport aux roues avant.

5. Fardier selon l'une quelconque des revendications précédentes, caractérisé en ce que le châssis a la forme d'une structure tubulaire ou profilée (1) présentant une rigidité à la fexion et à la torsion et s'étendant entre des bras de suspension fixes (8, 8'), ou un cadre rigide ou analogue pour les bogies des roues avant, et les bras à suspension pendulaire (12, 12') pour les roues arrière, le porte-charge (3) et la cabine (2) supportant la grue étant l'un et l'autre montés fixes sur ladite structure.

6. Fardier selon l'une quelconque des revendications 1-4, caractérisé en ce qu'en plus d'une partie (24) supportant la cabine sur laquelle est rigidement montée la partie inférieure (28) pour le porte-charge, le châssis comporte une partie arrière (25) qui lui est articulée et peut pivoter par rapport à la partie supportant la cabine au moyen d'au moins un vérin hydraulique ou analogue (27) pour braquer lesdites roues arrière (6, 6') sous un angle désiré par rapport aux roues avant.

7. Fardier selon l'une quelconque des revendications précédentes, caractérisé en ce que la grue ou une fixation (21') pour cette grue est rigidement reliée à la cabine (2') et en ce que la cabine (2') peut tourner par rapport au châssis (29, 1')

Fig 1

Fig 4

Fig 2

Fig 3

Fig 5

**2**

**4**

**4'**

**5**

_Fig 6_

_Fig 7_

**2**

**17**

**28**

**5**

**24**

**25**

**6**

**4**

**6'**

_Fig 8_

**26**

**25**

**24**

**27**

**6**

**6**

3

Fig 9

4